# EUROPEAN PATENT SPECIFICATION

(11) **EP 4 634 586 B1**
(45) Date of publication and mention of the grant of the patent: **26.08.2026**
(21) Application number: 23821976.0
(22) Date of filing: 08.12.2023
(51) Int. Cl.: F24F 11/46, F24F 11/63, F24F 11/77

(54) **A VENTILATION SYSTEM AND A METHOD FOR CONTROLLING SUCH A VENTILATION SYSTEM**
LÜFTUNGSSYSTEM UND VERFAHREN ZUR STEUERUNG EINES SOLCHEN LÜFTUNGSSYSTEMS
SYSTÈME DE VENTILATION ET PROCÉDÉ DE COMMANDE D'UN TEL SYSTÈME DE VENTILATION

(30) Priority: 16.12.2022 SE 2251482
(43) Date of publication of application: 22.10.2025
(73) Proprietor: GRAINPROTEINTECH CLIMATE CONTROL AIR TREATMENT ITALY S.P.A., 18027 Chiusavecchia (IM) (IT)
(72) Inventor: DELUCCHI, Massimo, 18100 Imperia IM (IT)
(74) Representative: Vanzini, Christian
(86) International application number: PCT/EP2023/084934
(87) International publication number: WO 2024/126295

(56) References cited:
- DE-U1- 202016 103 978
- US-A1- 2011 014 061
- US-A1- 2021 389 016
- US-B1- 8 814 639
- US-B2- 10 634 377
- US-B2- 11 486 407

## Description

This invention relates generally to the field of ventilation systems, in particular to those used in the agricultural or farming field to ventilate the interior of a building by extracting air from said interior and discharging it towards the external environment.

Fans for use in agriculture can works as FSF (Fixed Speed Fans), VFD (Variable Frequency Drives) installed on FSF or VSF (Variable Speed Fans); in all these applications the efficiency change at different speed and pressure. To have the desired in-house air-flow with the best efficiency is a tough work for farmers and the best working point changes according to the change in environmental condition. Farmers generally have to make a trade-off between livestock comfort and energy saving. On one hand, a low rotation speed means energy saving but also means low air flow, low pressure and a low rate of air exchange. On the other hand, a high rotation speed means good ventilation but at the same time it means low energy saving.

A ventilation system can comprise one or more arrays of fans configured to draw air from an enclosed space to be ventilated. Each array of fans can comprise a set of variable speed fans and a set of fixed speed fans. A control unit is programmed to actuate the array(s) of fans according to a plurality of different ventilation levels. In general, a respective total flow rate value of air flowing in the enclosed space to be ventilated is associated to each ventilation level. The respective total flow rate value which is associated to each ventilation level is generally set by the farmer based on the specific circumstances. Starting from the desired total flow rate value to be achieved for the specific ventilation level, the farmer determines empirically how many fans of the set of variable speed fans must be switched-on and the rotation speed to which these fans must be driven, as well as how many fans of the set of fixed speed fans must be switched-on in order to achieve this desired total flow rate value. However, there is no knowledge that this choice is the best, or close to the best, from an efficiency point of view.

Document US2011/014061 A describes an air handling system for a building, with a controller automatically controlling selected fan units to improve total fan array efficiency and selecting optimal number of fan units to permit operative fan units to run at peak efficiency.

An object of the present invention is therefore to provide an improved ventilation system and a method by means of which the control system of such ventilation system can determine, based on efficiency considerations, how many fans of the set of variable speed fans must be switched-on and the rotation speed to which these fans must be driven.

This object has been met by a ventilation system according to the independent claims. The dependent claims provide preferred embodiments of the invention. The ventilation system according to claim 1 comprises:
an array of fans configured to draw air from an enclosed space in parallel with each other, the array of fans comprising a set of variable speed fans, and
a control unit programmed to actuate the array of fans according to a plurality of ventilation levels, a respective total flow rate value of air flowing in the enclosed space being associated to each ventilation level of the plurality of ventilation levels, each ventilation level being distinguished by a respective number on of switched-on fans of the set of variable speed fans and by a respective rotation speed of the variable speed fans,
wherein the control unit is further configured to determine an actual value of static pressure associated to the array of fans, calculate, on the basis of static efficiency curves associated to the variable speed fans, a provisional value of the rotation speed of the variable speed fans that maximizes the static efficiency of the variable speed fans at the actual value of static pressure, and for each ventilation level, calculate and store in a memory the rotation speed of the variable speed fans associated to the ventilation level and the number of switched-on fans of the set of variable speed fans associated to the ventilation level, on the basis of the provisional value of the rotation speed.

This object has also been met by a method for controlling a ventilation system according to claim 2, the ventilation system comprising:
an array of fans configured to draw air from an enclosed space in parallel with each other, the array of fans comprising a set of variable speed fans, and
a control unit programmed to actuate the array of fans according to a plurality of ventilation levels, a respective total flow rate value of air flowing in the enclosed space being associated to each ventilation level of the plurality of ventilation levels, each ventilation level being distinguished by a respective number of switched-on fans of the set of variable speed fans and by a respective rotation speed of the variable speed fans,
wherein the method comprises the following steps performed by the control unit:
   a) determining an actual value of static pressure associated to the array of fans,
   b) calculating, on the basis of static efficiency curves associated to the variable speed fans, a provisional value of the rotation speed of the variable speed fans that maximizes the static efficiency of the variable speed fans at the actual value of static pressure,
   c) for each ventilation level, calculating and storing in a memory the rotation speed of the variable speed fans associated to the ventilation level and the number of switched-on fans of the set of variable speed fans associated to the ventilation level, on the basis of the provisional value of the rotation speed, and
   d) actuating the array (11, 11') of fans according to the plurality of ventilation levels LV.

In particular, step c) can comprise, for each ventilation level:
c.1) calculating a value of air flow rate produced by the array of fans and comparing the calculated value of air flow rate with the total flow rate value associated to the ventilation level,
   c.1.1) if the calculated value of air flow rate is greater than the total flow rate value associated to the ventilation level, reducing said provisional value in order to equalize the calculated value of air flow rate to the total flow rate value associated to the ventilation level,
   c.1.2) if the calculated value of air flow rate is smaller than the total flow rate value associated to the ventilation level, increasing of one unity a provisional number of switched-on fans of the set of variable speed fans, hereinafter provisional variable speed fan number,
c.2) repeating the steps from c.1) on until the calculated value of air flow rate become equal to the total flow rate value associated to the ventilation level,
c.3) storing in the memory said provisional value as the rotation speed of the variable speed fans associated to the ventilation level, and said provisional variable speed fan number as the number of switched-on fans of the set of variable speed fans associated to the ventilation level.

By a simple calculation, the proposed method enables the control unit of the ventilation system to determine the respective number of switched-on fans of the set of variable speed fans and the respective rotation speed of the variable speed fans associated to each ventilation level, based on considerations directed to the maximization of the static efficiency of the variable speed fans.

According a preferred embodiment, the array of fans further comprises a set of fixed speed fans, wherein each ventilation level is further distinguished by a respective number of switched-on fans of the set of fixed speed fans, and wherein step c) further comprises, for each ventilation level, calculating and storing in the memory the number of switched-on fans of the set of fixed speed fans associated to the ventilation level.

In this respect, the above mentioned step c.1.2) can further comprise:
if the calculated value of air flow rate is smaller than the total flow rate value associated to the ventilation level, calculating the static efficiency of the variable speed fans, and comparing the calculated static efficiency with a static efficiency of the fixed speed fans,
c.1.2.1) if the calculated static efficiency of the variable speed fans is smaller than the static efficiency of the fixed speed fans, increasing of one unity a provisional number of switched-on fans of the set of fixed speed fans, hereinafter provisional fixed speed fan number, and, if the calculated value of air flow rate is greater than the total flow rate value associated to the ventilation level, reducing said provisional value in order to equalize the calculated value of air flow rate to the total flow rate value associated to the ventilation level,
c.1.2.2) if the calculated static efficiency of the variable speed fans is greater than the static efficiency of the fixed speed fans, increasing of one unity the provisional variable speed fan number,
wherein step c.3) further comprises storing in the memory said provisional fixed speed fan number as the number of switched-on fans of the set of fixed speed fans associated to the ventilation level.

This preferred embodiment enables the control unit of the ventilation system to determine also the respective number of switched-on fans of the set of variable fixed fans. This is of primary importance when the array of fans comprises a set of fixed speed fans in addition to the set of variable speed fans.

According to a further preferred embodiment, step a) comprises measuring the actual value of static pressure with at least one pressure sensor arranged immediately upstream of the array of fans. According to an alternative embodiment, step a) comprises estimating the actual value of static pressure on the basis of a measured absorbed power and measured rotation speed of a fan of the set of variable speed fans. The inventor has found that the measured values provided by the pressure sensors of the ventilation systems currently on the market do not correspond generally to the actual static pressure of the fans, because of a significant and uncontrollable pressure drop intervening between the position of these pressure sensors and the position of the fans. Therefore, providing a reliable indication of the static pressure of the fans as provided by the above embodiments represents a further contribution towards the optimization of the ventilation levels.

According to a preferred embodiment, step a) comprises:
determining temporally successive actual values of static pressure associated to the array of fans, and comparing an actual value of static pressure determined at a given time instant with an actual value of static pressure determined at a preceding time instant,
wherein the method further comprises:
   if the actual value of static pressure determined at the given time instant is greater or lower than the actual value of static pressure determined at the preceding time instant by a predetermined threshold amount, triggering steps b) and c).

In this way, the calculation method of the invention can be performed dynamically in order to adapt the ventilation levels to changes of the external environment conditions or changes of the ambient conditions within the enclosed space.

It is to be understood that all the described embodiments of the method are applicable also on the ventilation system, and specifically the control unit of the ventilation system being configured to perform such method.

The above mentioned object has also been met by a control unit of a ventilation system according to claim 9, comprising:
a processor; and
a memory coupled to the processor to store instructions, which when executed by the processor, cause the processor to perform the method of the invention.

Further features and advantages of the ventilation system and the method according to the invention will become clearer from the following detailed description of an embodiment of the invention, made in reference to the accompanying drawings, provided purely for illustrative and non-limiting purposes, wherein:
- Figure 1 is a schematic plan view of an exemplary enclosed space provided with a ventilation system;
- Figure 2a is a static efficiency diagram of an exemplary variable speed fan;
- Figure 2b is an efficiency vs. rotation speed diagram comparing the efficiency of an exemplary variable speed fan with the efficiency of an exemplary fixed speed fan, at a given static pressure;
- Figures 3 and 4 are flow-chart representations of a method according to the invention.

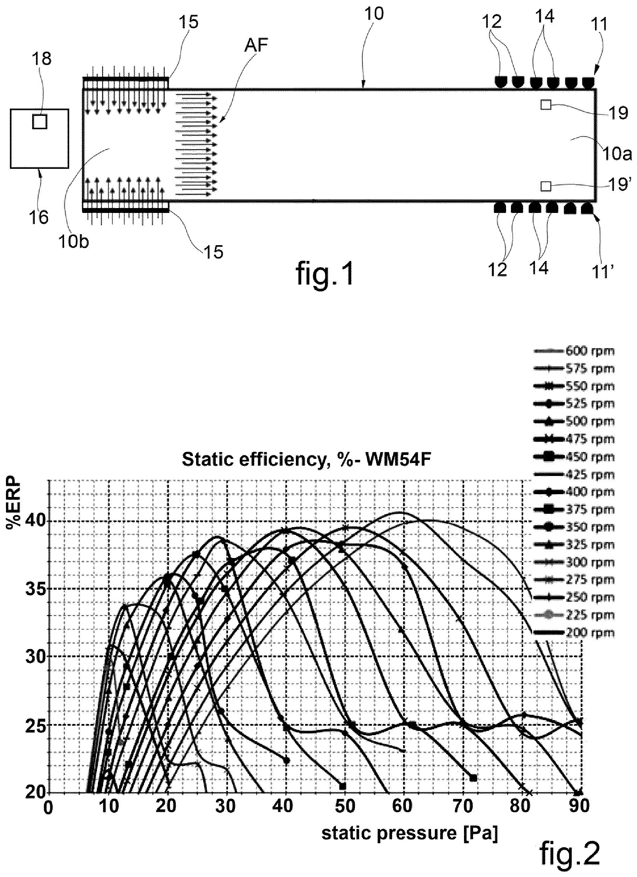

Figure 1 shows an enclosed space, such as a building for livestock farming, which is designated with 10. The enclosed space 10 comprises a ventilation system installed therein. The ventilation system comprises a first array 11 of fans and a second array 11' of fans configured to draw air from the enclosed space 10 and discharge air towards the external environment. In the example shown in Figure 1, the arrays 11, 11' of fans are positioned at one end 10a of the enclosed space 10, and on respectively opposite sides of the enclosed space. The fans of each individual array, 11 or 11', operate in parallel with each other. It is assumed that all fans of the first array 11 operate at a same, respective working static pressure, and that the second array 11' operate at a same, respective working static pressure, which can be different from the working static pressure of the fans of the first array 11, due to different external environment conditions or different ambient conditions within the enclosed space. The ventilation system can comprise more than two arrays of fans, or even just one single array of fans. For the sake of simplicity, the following description considers one single array of fans; however, it is intended that, in case of a ventilation system comprising a plurality of arrays of fans, what described below applies to each individual array of fans, respectively.

The array 11 of fans comprises a set of variable speed fans 12 which are identical to each other, i.e. the variable speed fans 12 have the same technical specifications. As used herein, "variable speed fan" is intended to mean a fan whose impeller can be adjusted as to its rotation speed. The array 11 of fans can comprise, additionally, a set of fixed speed fans 14 which are identical to each other, i.e. the fixed speed fans 14 have the same technical specifications. As used herein, "fixed speed fan" is intended to mean a fan whose impeller cannot be adjusted as to its rotation speed, and therefore has a fixed rotation speed.

Figure 1 also schematically depicts air inlets 15 through which air from the external environment is drawn into the enclosed space 10. Exemplary air inlets comprise, for instance, tunnel doors with their respective cooling pads or inlet windows. In the example shown in Figure 1, the air inlets 15 are positioned at one end 10b of the enclosed space 10, opposite to the end 10a at which the arrays 11, 11' are positioned. Arrows AF designate the total air flow flowing in the enclosed space 10 from the air inlets 15 to air outlets at which the array 11 of fans is located.

The ventilation system further comprises a control unit 16 programmed to actuate the array 11 of fans according to a plurality of ventilation levels. The control unit 16 is provided with a memory 18. A respective total flow rate value TFR_{LV} of the air flow AF is associated to each ventilation level. The index LV indicates the specific ventilation level and varies from 1 to LVMAX, which is the total number of ventilation levels. The respective total flow rate value TFR_{LV} which is associated to each ventilation level LV is generally set by the farmer based on the specific circumstances. Furthermore, the farmer can input other operating parameters of the ventilation system, such as, for instance, duty cycle parameters of the fans. Actually, the switched-on fans can operate in a pulsed way, with a total period T of the waveform representing operation of the fans, and a duty cycle D. In this respect, the control unit 16 can be programmed to adjust the duty cycle D of the fans from a minimum duty cycle Dₘ to a maximum duty cycle, D_{M} = 100%, in order to increase accordingly the air flow rate produced by the fans. The total period T is typically set to, e.g., 300 s.

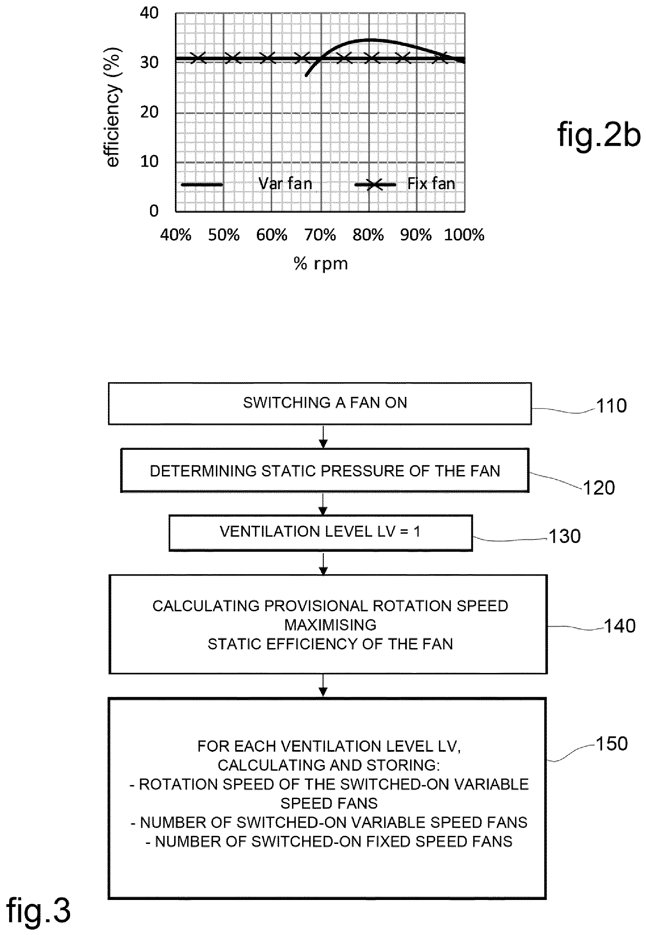

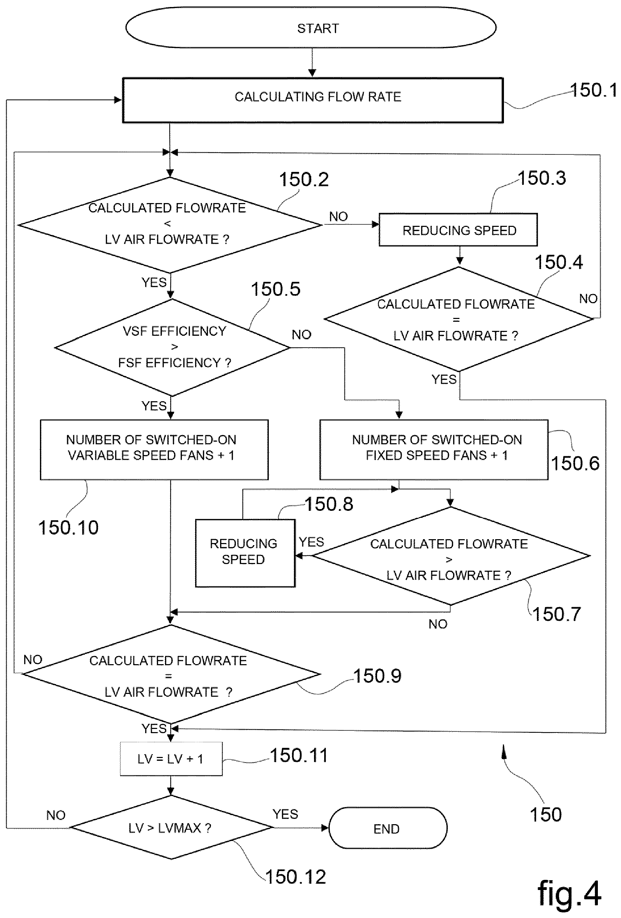

Starting from the desired total flow rate value TFR_{LV} to be achieved for the specific ventilation level LV, the control unit 16 determine how many fans of the set of variable speed fans 12 must be switched-on (i.e. the number NVFₒₙ of switched-on fans of the set of variable speed fans 12) and the rotation speed RS to which these fans must be driven, as well as how many fans of the set of fixed speed fans 14 must be switched-on in order to achieve this desired total flow rate value TFR_{LV} (i.e. the number NFFₒₙ of switched-on fans of the set of fixed speed fans 14). The way this determination is made is explained in the following, with reference to Figures 3 and 4.

The calculation method requires that a fan of the array 11 of fans is switched-on (step 110).

According to step 120, an actual value of static pressure associated to the array 11 of fans, more specifically to the switched-on fan, is determined. This actual value is generally different from the pressure measurements that are conventionally provided by pressure sensors located at conventional positions, for instance at the air inlet end 10b of the enclosed space 10 or at about mid-length of the enclosed space 10. Therefore, the actual value of static pressure associated to the array 11 of fans can be determined by measuring the actual value of static pressure with at least one pressure sensor 19, 19' arranged immediately upstream of the array 11 of fans. In the example shown in Figure 1, two pressure sensors 19, 19' are positioned at the end 10b of the enclosed space 10 at which the arrays 11, 11' are positioned, and are associated to the first array 11 of fans and to the second array 11' of fans, respectively. According to an alternative embodiment, the actual value of static pressure associated to the array 11 of fans can be determined by estimating the actual value of static pressure on the basis of a measured absorbed power and measured rotation speed of the switched-on fan. The control unit 16 is typically provided with a reading function programmed to read the absorbed power and rotation speed of the fans and, therefore, due to the fact that the static pressure is uniquely linked to these quantities, a determination of the actual value of static pressure associated to the array 11 of fans is possible even if a dedicated pressure sensor is not present. If the switched-on fan is one of the fixed speed fans, a measurement of the rotation speed is not required, as the rotation speed of a fixed speed fan is known by design.

Once the actual value of static pressure associated to the array 11 of fans has been determined, calculation is started with reference to the first ventilation level, LV = 1 (step 130). According to step 140, the control unit 16 calculates, on the basis of static efficiency curves associated to the variable speed fans 14 and stored in the memory 18, a provisional value RSₚ of the rotation speed of the variable speed fans 14 that maximizes the static efficiency ERP of the variable speed fans 14 at the actual value of static pressure. Diagram of Figure 2a plots static efficiency curves of an exemplary variable speed fan as a function of static pressure; each curve is associated to a specific rotation speed of the fan. For instance, if the actual value of static pressure is 40 Pa, then the highest value of static efficiency ERP is associated to a rotation speed of 450 rpm.

According to step 150, the number NVFₒₙ of switched-on fans of the set of variable speed fans 12 and the rotation speed RS to which these fans must be driven, as well as the number NFFₒₙ of switched-on fans of the set of fixed speed fans 14 are calculated for each ventilation level from LV = 1 to LV = LVMAX. Details of step 150 are reported in Figure 3.

According to step 150.1, the control unit 16 calculates a value of air flow rate produced by the array 11 of fans for the first ventilation level, LV =1, considering a provisional number NVFₚ of switched-on fans of the set of variable speed fans 12 such that NVFₚ = 1 (one switched-on variable speed fan), the provisional value RSₚ of the rotation speed of the variable speed fans 14 as calculated in step 140, and a provisional number NFFₚ of switched-on fans of the set of fixed speed fans 14 such that NFFₚ = 0 (no switched-on fixed speed fan).

Then, the control unit 16 compares the calculated value of air flow rate with the total flow rate value TFR_{LV} associated to the ventilation level LV (step 150.2).

If the calculated value of air flow rate is greater than the total flow rate value TFR_{LV} associated to the ventilation level LV, the control unit 16 reduces (by a predetermined amount) the provisional value RSₚ (and, consequently, the calculated value of air flow rate) in order to equalize the calculated value of air flow rate to the total flow rate value TFR_{LV} associated to the ventilation level LV (steps 150.3 and 150.4). Then, the calculated values for RSₚ, NVFₚ and NFFₚ are stored in the memory 18 of the control unit 16 as the rotation speed RS of the variable speed fans 12 associated to the ventilation level LV, as the number NVFₒₙ of switched-on fans of the set of variable speed fans 12 associated to the ventilation level, and the number NFFₒₙ of switched-on fans of the set of fixed speed fans 14 associated to the ventilation level LV, respectively. Then, the control unit 1 increases of one unity the level index LV (step 150.11); in other words, the control unit 1 passes to calculation for the next ventilation level.

If, on the contrary, the calculated value of air flow rate is smaller than the total flow rate value TFR_{LV} associated to the ventilation level LV, then the control unit 16 calculates the static efficiency of the variable speed fans 12 with a rotation speed equal to the provisional value RSₚ and compares the calculated static efficiency with a static efficiency of the fixed speed fans 14, store in the memory 18 (step 150.5; in Figure 4, VSF stands for variable speed fan and FSF stands for fixed speed fan). For instance, if static pressure is 40 Pa and rotation speed is 450 rpm, the diagram of Figure 2a gives a static efficiency ERP of approximately 39%. Figure 2b is an efficiency vs. rotation speed diagram comparing the efficiency of an exemplary variable speed fan with the efficiency of an exemplary fixed speed fan, at a given static pressure. The rotation speed is expressed as a percentage of the maximum rotation speed of the fan. This diagram shows that, in a range comprised between 70% and 98% of the maximum speed, the efficiency of the variable speed fan is greater than the efficiency of the fixed speed fan at this specific static pressure (40 Pa).

If the calculated static efficiency ERP of the variable speed fans 12 is smaller than the static efficiency of the fixed speed fans 14, the control unit 16 increases of one unity the provisional number NFFₚ of switched-on fans of the set of fixed speed fans 14 (step 150.6), and calculates a new value of air flow rate produced by the array 11 of fans, taking into account the current values of RSₚ, NVFₚ and NFFₚ (the flow rate produced by a fixed speed fan is constant). Then, the control unit 16 compares the calculated value of air flow rate with the total flow rate value TFR_{LV} associated to the ventilation level LV (step 150.7). If the calculated value of air flow rate is greater than the total flow rate value TFR_{LV} associated to the ventilation level LV, the control unit 16 reduces (by a predetermined amount) the provisional value RSₚ (and, consequently, the calculated value of air flow rate) in order to equalize the calculated value of air flow rate to the total flow rate value TFR_{LV} associated to the ventilation level LV (steps 150.8 and 150.9). Then, the calculated values for RSₚ, NVFₚ and NFFₚ are stored in the memory 18 of the control unit 16 as the rotation speed RS of the variable speed fans 12 associated to the ventilation level LV, as the number NVFₒₙ of switched-on fans of the set of variable speed fans 12 associated to the ventilation level, and the number NFFₒₙ of switched-on fans of the set of fixed speed fans 14 associated to the ventilation level LV, respectively. Then, the control unit 1 increases of one unity the level index LV (step 150.11); in other words, the control unit 1 passes to calculation for the next ventilation level. If, on the contrary, the comparation at step 150.7 determines that the calculated value of air flow rate is not greater than the total flow rate value TFR_{LV} associated to the ventilation level LV, then the above described steps from step 150.2 on are repeated until the calculated value of air flow rate become equal to the total flow rate value TFR_{LV} associated to the ventilation level LV.

If the comparation at step 150.5 determines that the calculated static efficiency ERP of the variable speed fans 12 is greater than the static efficiency of the fixed speed fans 14, the control unit 16 increases of one unity the provisional number NVFₚ of switched-on fans of the set of variable speed fans 12 (step 150.10) and calculates a new value of air flow rate produced by the array 11 of fans, taking into account the current values of RSₚ, NVFₚ and NFFₚ. Then, the control unit 16 compares the calculated value of air flow rate with the total flow rate value TFR_{LV} associated to the ventilation level LV (step 150.9). If the calculated value of air flow rate is equal to the total flow rate value TFR_{LV} associated to the ventilation level LV, then the calculated values for RSₚ, NVFₚ and NFFₚ are stored in the memory 18 of the control unit 16 as the rotation speed RS of the variable speed fans 12 associated to the ventilation level LV, as the number NVFₒₙ of switched-on fans of the set of variable speed fans 12 associated to the ventilation level, and the number NFFₒₙ of switched-on fans of the set of fixed speed fans 14 associated to the ventilation level LV, respectively. Then, the control unit 1 increases of one unity the level index LV (step 150.11); in other words, the control unit 1 passes to calculation for the next ventilation level. If, on the contrary, the comparation at step 150.9 determines that the calculated value of air flow rate is not equal to the total flow rate value TFR_{LV} associated to the ventilation level LV, then the above described steps from step 150.2 on are repeated until the calculated value of air flow rate become equal to the total flow rate value TFR_{LV} associated to the ventilation level LV.

The above discussed steps from 150.1 to 150.11 are repeated until the level index LV reaches the value LVMAX (step 150.12). For each ventilation level LV, calculation starts again from the value of air flow rate as already calculated for the first ventilation level, LV = 1, considering therefore a provisional number NVFₚ of switched-on fans of the set of variable speed fans 12 such that NVFₚ = 1 (one switched-on variable speed fan), the provisional value RSₚ of the rotation speed of the variable speed fans 14 as calculated in step 140, and a provisional number NFFₚ of switched-on fans of the set of fixed speed fans 14 such that NFFp = 0 (no switched-on fixed speed fan).

If the ventilation system does not comprise fixed speed fans, then the calculation procedure is similar to that above described, but does not comprise steps 150.5, 150.6, 150.7 and 150.8.

According to an embodiment, the above described calculation method is performed once, when the ventilation system is started. Therefore, the control unit 16 calculates and stores the respective values of the rotation speed RS of the variable speed fans 12 associated to the ventilation levels LV, the respective numbers NVFₒₙ of switched-on fans of the set of variable speed fans 12 associated to the ventilation levels LV, and the numbers NFFₒₙ of switched-on fans of the set of fixed speed fans 14 associated to the ventilation levels LV once, when the ventilation system is started.

According to another embodiment, the above described calculation method can be triggered in response to a certain event, such as for example when the control unit 16 determines that the actual value of static pressure associated to the array 11 of fans has changed by a predetermined threshold amount. Therefore, the control unit 16 calculates and stores the respective values of the rotation speed RS of the variable speed fans 12 associated to the ventilation levels LV, the respective numbers NVFₒₙ of switched-on fans of the set of variable speed fans 12 associated to the ventilation levels LV, and the numbers NFFₒₙ of switched-on fans of the set of fixed speed fans 14 associated to the ventilation levels LV each time the control unit 16 determines that the actual value of static pressure associated to the array 11 of fans has changed by a predetermined threshold amount.

### Example

A broiler house is considered, whose structure is similar to that shown in Figure 1. The ventilation system comprises 8 fixed speed fans (model WM 54 F 1,5 hp produced by Munters Corp.) and 4 variable speed fans (model WM 54 F MD produced by Munters Corp.). The ventilation system is configured to have 30 different ventilation levels. The total flow rate TFR_{LV} associated to each ventilation level LV has been set by the farmer, and reported in Table 1 below. The total flow rate TFR_{LV} associated to the highest ventilation level, LV = 30, has been calculated considering all fixed speed fans running and all variable speed fans running at their maximum speed. The control unit of the ventilation system has determined that the actual value of static pressure associated to the array of fans is 40 Pa, and therefore has calculated the respective values of the rotation speed RS of the variable speed fans associated to the ventilation levels LV, the respective numbers NVFₒₙ of switched-on fans of the set of variable speed fans associated to the ventilation levels LV, and the numbers NFFₒₙ of switched-on fans of the set of fixed speed fans associated to the ventilation levels LV, reported in Table 1 below. The rotation speed RS is expressed as a percentage of the maximum rotation speed of the variable speed fans.

The control unit of this example was further programmed to adjust the duty cycle D of the single switched-on fan associated to the lowest ventilation levels in order to have the total flow rate desired for these levels with the minimum energy consumption, without reducing the actual static pressure. In particular, the duty cycle was equal to 0% at the first ventilation level, and equal to 70% at the second ventilation level, while from the third ventilation level on was always equal to 100%. The calculation method disclosed in the present description was actually applied to ventilation levels LV from 3 to 30.

**Table 1**

| LV | TFR_{LV} (m³/h) | NFFₒₙ | NVFₒₙ | RS (%) |
|---|---|---|---|---|
| 1 | 0 | 0 | 1 | 70% |
| 2 | 14.000 | 0 | 1 | 70% |
| 3 | 17.424 | 0 | 1 | 70% |
| 4 | 20.908 | 0 | 1 | 71% |
| 5 | 24.393 | 0 | 1 | 74% |
| 6 | 27.878 | 0 | 1 | 77% |
| 7 | 32.524 | 0 | 1 | 82% |
| 8 | 37.170 | 0 | 2 | 70% |
| 9 | 41.817 | 0 | 2 | 71% |
| 10 | 48.000 | 0 | 2 | 74% |
| 11 | 50.000 | 0 | 2 | 75% |
| 12 | 65.000 | 0 | 2 | 82% |
| 13 | 70.141 | 0 | 2 | 85% |
| 14 | 80.000 | 0 | 3 | 76% |
| 15 | 90.000 | 0 | 3 | 79% |
| 16 | 100.000 | 0 | 3 | 83% |
| 17 | 110.000 | 0 | 4 | 77% |
| 18 | 120.000 | 0 | 4 | 79% |
| 19 | 130.000 | 0 | 4 | 82% |
| 20 | 140.000 | 0 | 4 | 85% |
| 21 | 160.000 | 0 | 4 | 90% |
| 22 | 180.000 | 0 | 4 | 97% |
| 23 | 200.000 | 1 | 4 | 90% |
| 24 | 230.000 | 2 | 4 | 88% |
| 25 | 270.000 | 3 | 4 | 88% |
| 26 | 310.000 | 4 | 4 | 88% |
| 27 | 360.000 | 5 | 4 | 91% |
| 28 | 400.000 | 6 | 4 | 91% |
| 29 | 460.000 | 7 | 4 | 97% |
| 30 | 500.000 | 8 | 4 | 98% |

## Claims

1. A ventilation system, the ventilation system comprising:
an array (11, 11') of fans configured to draw air from an enclosed space (10) in parallel with each other, the array (11, 11') of fans comprising a set of variable speed fans (12), and
a control unit (16) programmed to actuate the array (11, 11') of fans according to a plurality of ventilation levels LV, a respective total flow rate value TFRLV of air flowing in the enclosed space (10) being associated to each ventilation level LV of the plurality of ventilation levels, each ventilation level LV being distinguished by a respective number NVFon of switched-on fans of the set of variable speed fans (12) and by a respective rotation speed RS of the variable speed fans (12),
wherein the control unit (16) is further configured to determine an actual value of static pressure associated to the array (11, 11') of fans, calculate, on the basis of static efficiency curves associated to the variable speed fans (12), a provisional value RSₚ of the rotation speed of the variable speed fans (12) that maximizes the static efficiency of the variable speed fans (12) at the actual value of static pressure, and for each ventilation level LV, calculate and store in a memory (18) the rotation speed RS of the variable speed fans (12) associated to the ventilation level LV and the number NVFₒₙ of switched-on fans of the set of variable speed fans (12) associated to the ventilation level LV, on the basis of the provisional value RSₚ of the rotation speed

2. A method for controlling a ventilation system according to claim 1, wherein the method comprises the following steps performed by the control unit (16):
a) determining an actual value of static pressure associated to the array (11, 11') of fans,
b) calculating, on the basis of static efficiency curves associated to the variable speed fans (12), a provisional value RSₚ of the rotation speed of the variable speed fans (12) that maximizes the static efficiency of the variable speed fans (12) at the actual value of static pressure,
c) for each ventilation level LV, calculating and storing in a memory (18) the rotation speed RS of the variable speed fans (12) associated to the ventilation level LV and the number NVFₒₙ of switched-on fans of the set of variable speed fans (12) associated to the ventilation level LV, on the basis of the provisional value RSₚ of the rotation speed, and
d) actuating the array (11, 11') of fans according to the plurality of ventilation levels LV.

3. The method of claim 2, wherein step c) comprises, for each ventilation level LV:
c.1) calculating a value of air flow rate produced by the array (11, 11') of fans and comparing the calculated value of air flow rate with the total flow rate value TFR_{LV} associated to the ventilation level LV,
c.1.1) if the calculated value of air flow rate is greater than the total flow rate value TFR_{LV} associated to the ventilation level LV, reducing said provisional value RSₚ in order to equalize the calculated value of air flow rate to the total flow rate value TFR_{LV} associated to the ventilation level LV,
c.1.2) if the calculated value of air flow rate is smaller than the total flow rate value TFR_{LV} associated to the ventilation level LV, increasing of one unity a provisional number NVFₚ of switched-on fans of the set of variable speed fans (12), hereinafter provisional variable speed fan number,
c.2) repeating the steps from c.1) on until the calculated value of air flow rate become equal to the total flow rate value TFR_{LV} associated to the ventilation level LV,
c.3) storing in the memory (18) said provisional value RSₚ as the rotation speed RS of the variable speed fans (12) associated to the ventilation level LV, and said provisional variable speed fan number NVFₚ as the number NVFₒₙ of switched-on fans of the set of variable speed fans (12) associated to the ventilation level LV.

4. The method of claim 2 or 3, wherein the array (11, 11') of fans further comprises a set of fixed speed fans (14), wherein each ventilation level LV is further distinguished by a respective number NFFₒₙ of switched-on fans of the set of fixed speed fans (14), and wherein step c) further comprises, for each ventilation level LV, calculating and storing in the memory (18) the number NFFₒₙ of switched-on fans of the set of fixed speed fans (14) associated to the ventilation level LV.

5. The method of claims 3 and 4, wherein step c.1.2) further comprises:
if the calculated value of air flow rate is smaller than the total flow rate value TFR_{LV} associated to the ventilation level LV, calculating the static efficiency ERP of the variable speed fans (12), and comparing the calculated static efficiency ERP with a static efficiency of the fixed speed fans (14),
c.1.2.1) if the calculated static efficiency ERP of the variable speed fans (12) is smaller than the static efficiency of the fixed speed fans (14), increasing of one unity a provisional number NFFₚ of switched-on fans of the set of fixed speed fans (14), hereinafter provisional fixed speed fan number, and, if the calculated value of air flow rate is greater than the total flow rate value TFR_{LV} associated to the ventilation level LV, reducing said provisional value RSₚ in order to equalize the calculated value of air flow rate to the total flow rate value TFR_{LV} associated to the ventilation level LV,
c.1.2.2) if the calculated static efficiency ERP of the variable speed fans (12) is greater than the static efficiency of the fixed speed fans (14), increasing of one unity the provisional variable speed fan number NVFₚ,
wherein step c.3) further comprises storing in the memory (18) said provisional fixed speed fan number NFFₚ as the number NFFₒₙ of switched-on fans of the set of fixed speed fans (14) associated to the ventilation level (LV).

6. The method of any of claims 2-5, wherein step a) comprises measuring the actual value of static pressure with at least one pressure sensor (19, 19') arranged immediately upstream of the array (11, 11') of fans.

7. The method of any of claims 2 to 5, wherein step a) comprises estimating the actual value of static pressure on the basis of a measured absorbed power and measured rotation speed of a fan of the set of variable speed fans (12).

8. The method of any of claims 2-7, wherein step a) comprises:
determining temporally successive actual values of static pressure associated to the array (11, 11') of fans, and comparing an actual value of static pressure determined at a given time instant with an actual value of static pressure determined at a preceding time instant, and
wherein the method further comprises:
if the actual value of static pressure determined at the given time instant is greater or lower than the actual value of static pressure determined at the preceding time instant by a predetermined threshold amount, triggering steps b) and c).

9. A control unit (16) of a ventilation system, comprising:
a processor; and
a memory (18) coupled to the processor to store instructions, which when executed by the processor, cause the processor to perform the method of any of claims 2 to 8.

## Patentansprüche

1. Lüftungssystem, wobei das Lüftungssystem umfasst:
eine Anordnung (11, 11') von Ventilatoren, die dazu ausgelegt sind, Luft aus einem geschlossenen Raum (10) parallel zueinander anzusaugen, wobei die Anordnung (11, 11') von Ventilatoren einen Satz von Ventilatoren mit variabler Drehzahl (12) umfasst, und
eine Steuereinheit (16), die programmiert ist, die Anordnung (11, 11') von Ventilatoren gemäß einer Mehrzahl von Lüftungsstufen LV anzusteuern, wobei jeder Lüftungsstufe LV der Mehrzahl von Lüftungsstufen ein jeweiliger Gesamtvolumenstromwert TFRLV der in dem geschlossenen Raum (10) strömenden Luft zugeordnet ist, wobei jede Lüftungsstufe LV durch eine jeweilige Anzahl NVFon eingeschalteter Ventilatoren des Satzes von Ventilatoren mit variabler Drehzahl (12) und durch eine jeweilige Drehzahl RS der Ventilatoren mit variabler Drehzahl (12) unterschieden wird,
wobei die Steuereinheit (16) ferner dazu ausgelegt ist, einen Istwert des statischen Drucks zu bestimmen, der der Anordnung (11, 11') von Ventilatoren zugeordnet ist, auf der Grundlage von statischen Wirkungsgradkennlinien, die den Ventilatoren mit variabler Drehzahl (12) zugeordnet sind, einen vorläufigen Wert RSₚ der Drehzahl der Ventilatoren mit variabler Drehzahl (12) zu berechnen, der den statischen Wirkungsgrad der Ventilatoren mit variabler Drehzahl (12) bei dem Istwert des statischen Drucks maximiert, und für jede Lüftungsstufe LV die Drehzahl RS der Ventilatoren mit variabler Drehzahl (12), die der Lüftungsstufe LV zugeordnet ist, und die Anzahl NVFₒₙ eingeschalteter Ventilatoren des Satzes von Ventilatoren mit variabler Drehzahl (12), die der Lüftungsstufe LV zugeordnet ist, auf der Grundlage des vorläufigen Werts RSₚ der Drehzahl zu berechnen und in einem Speicher (18) zu speichern.

2. Verfahren zur Steuerung eines Lüftungssystems nach Anspruch 1, wobei das Verfahren die folgenden von der Steuereinheit (16) ausgeführten Schritte umfasst:
a) Bestimmen eines Istwerts des statischen Drucks, der der Anordnung (11, 11') von Ventilatoren zugeordnet ist,
b) Berechnen eines vorläufigen Werts RSₚ der Drehzahl der Ventilatoren mit variabler Drehzahl (12) auf der Grundlage von statischen Wirkungsgradkennlinien, die den Ventilatoren mit variabler Drehzahl (12) zugeordnet sind, wobei der vorläufige Wert RSₚ den statischen Wirkungsgrad der Ventilatoren mit variabler Drehzahl (12) bei dem Istwert des statischen Drucks maximiert,
c) für jede Lüftungsstufe LV Berechnen und Speichern in einem Speicher (18) der Drehzahl RS der Ventilatoren mit variabler Drehzahl (12), die der Lüftungsstufe LV zugeordnet ist, und der Anzahl NVFₒₙ eingeschalteter Ventilatoren des Satzes von Ventilatoren mit variabler Drehzahl (12), die der Lüftungsstufe LV zugeordnet ist, auf der Grundlage des vorläufigen Werts RSₚ der Drehzahl, und
d) Ansteuern der Anordnung (11, 11') von Ventilatoren gemäß der Mehrzahl von Lüftungsstufen LV.

3. Verfahren nach Anspruch 2, wobei Schritt c) für jede Lüftungsstufe LV umfasst:
c.1) Berechnen eines von der Anordnung (11, 11') von Ventilatoren erzeugten Luftvolumenstromwerts und Vergleichen des berechneten Luftvolumenstromwerts mit dem der Lüftungsstufe LV zugeordneten Gesamtvolumenstromwert TFR_{LV},
c.1.1) wenn der berechnete Luftvolumenstromwert größer ist als der der Lüftungsstufe LV zugeordnete Gesamtvolumenstromwert TFR_{LV}, Verringern des vorläufigen Werts RSₚ, um den berechneten Luftvolumenstromwert dem der Lüftungsstufe LV zugeordneten Gesamtvolumenstromwert TFR_{LV} anzugleichen,
c.1.2) wenn der berechnete Luftvolumenstromwert kleiner ist als der der Lüftungsstufe LV zugeordnete Gesamtvolumenstromwert TFR_{LV}, Erhöhen einer vorläufigen Anzahl NVFₚ eingeschalteter Ventilatoren des Satzes von Ventilatoren mit variabler Drehzahl (12) um eine Einheit, nachfolgend als vorläufige Anzahl von Ventilatoren mit variabler Drehzahl bezeichnet,
c.2) Wiederholen der Schritte aus c.1), bis der berechnete Luftvolumenstromwert gleich dem der Lüftungsstufe LV zugeordneten Gesamtvolumenstromwert TFR_{LV} wird,
c.3) Speichern des vorläufigen Werts RSₚ in dem Speicher (18) als Drehzahl RS der Ventilatoren mit variabler Drehzahl (12), die der Lüftungsstufe LV zugeordnet ist, und der vorläufigen Anzahl von Ventilatoren mit variabler Drehzahl NVFₚ als Anzahl NVFₒₙ eingeschalteter Ventilatoren des Satzes von Ventilatoren mit variabler Drehzahl (12), die der Lüftungsstufe LV zugeordnet ist.

4. Verfahren nach Anspruch 2 oder 3, wobei die Anordnung (11, 11') von Ventilatoren ferner einen Satz von Ventilatoren mit fester Drehzahl (14) umfasst, wobei jede Lüftungsstufe LV ferner durch eine jeweilige Anzahl NFFₒₙ eingeschalteter Ventilatoren des Satzes von Ventilatoren mit fester Drehzahl (14) unterschieden wird, und wobei Schritt c) ferner für jede Lüftungsstufe LV das Berechnen und Speichern in dem Speicher (18) der Anzahl NFFₒₙ eingeschalteter Ventilatoren des Satzes von Ventilatoren mit fester Drehzahl (14), die der Lüftungsstufe LV zugeordnet ist, umfasst.

5. Verfahren nach den Ansprüchen 3 und 4, wobei Schritt c.1.2) ferner umfasst:
wenn der berechnete Luftvolumenstromwert kleiner ist als der der Lüftungsstufe LV zugeordnete Gesamtvolumenstromwert TFR_{LV}, Berechnen des statischen Wirkungsgrads ER_{P} der Ventilatoren mit variabler Drehzahl (12) und Vergleichen des berechneten statischen Wirkungsgrads ER_{P} mit einem statischen Wirkungsgrad der Ventilatoren mit fester Drehzahl (14),
c.1.2.1) wenn der berechnete statische Wirkungsgrad ER_{P} der Ventilatoren mit variabler Drehzahl (12) kleiner ist als der statische Wirkungsgrad der Ventilatoren mit fester Drehzahl (14), Erhöhen einer vorläufigen Anzahl NFFₚ eingeschalteter Ventilatoren des Satzes von Ventilatoren mit fester Drehzahl (14) um eine Einheit, nachfolgend als vorläufige Anzahl von Ventilatoren mit fester Drehzahl bezeichnet, und, wenn der berechnete Luftvolumenstromwert größer ist als der der Lüftungsstufe LV zugeordnete Gesamtvolumenstromwert TFR_{LV}, Verringern des vorläufigen Werts RSₚ, um den berechneten Luftvolumenstromwert dem der Lüftungsstufe LV zugeordneten Gesamtvolumenstromwert TFR_{LV} anzugleichen,
c.1.2.2) wenn der berechnete statische Wirkungsgrad ER_{P} der Ventilatoren mit variabler Drehzahl (12) größer ist als der statische Wirkungsgrad der Ventilatoren mit fester Drehzahl (14), Erhöhen der vorläufigen Anzahl von Ventilatoren mit variabler Drehzahl NVFₚ um eine Einheit,
wobei Schritt c.3) ferner das Speichern der vorläufigen Anzahl von Ventilatoren mit fester Drehzahl NFFₚ in dem Speicher (18) als Anzahl NFFₒₙ eingeschalteter Ventilatoren des Satzes von Ventilatoren mit fester Drehzahl (14), die der Lüftungsstufe (LV) zugeordnet ist, umfasst.

6. Verfahren nach einem der Ansprüche 2-5, wobei Schritt a) das Messen des Istwerts des statischen Drucks mittels mindestens eines Drucksensors (19, 19'), der unmittelbar stromaufwärts der Anordnung (11, 11') von Ventilatoren angeordnet ist, umfasst.

7. Verfahren nach einem der Ansprüche 2 bis 5, wobei Schritt a) das Schätzen des Istwerts des statischen Drucks auf der Grundlage einer gemessenen aufgenommenen Leistung und einer gemessenen Drehzahl eines Ventilators des Satzes von Ventilatoren mit variabler Drehzahl (12) umfasst.

8. Verfahren nach einem der Ansprüche 2-7, wobei Schritt a) umfasst:
zeitlich aufeinanderfolgende Istwerte des statischen Drucks zu bestimmen, die der Anordnung (11, 11') von Ventilatoren zugeordnet sind, und einen zu einem gegebenen Zeitpunkt bestimmten Istwert des statischen Drucks mit einem zu einem vorhergehenden Zeitpunkt bestimmten Istwert des statischen Drucks zu vergleichen,
und
wobei das Verfahren ferner umfasst:
wenn der zu dem gegebenen Zeitpunkt bestimmte Istwert des statischen Drucks um einen vorbestimmten Schwellenwert größer oder kleiner ist als der zu dem vorhergehenden Zeitpunkt bestimmte Istwert des statischen Drucks, die Schritte b) und c) auszulösen.

9. Steuereinheit (16) eines Lüftungssystems, umfassend:
einen Prozessor; und
einen Speicher (18), der mit dem Prozessor gekoppelt ist, um Anweisungen zu speichern, die, wenn sie durch den Prozessor ausgeführt werden, den Prozessor veranlassen, das Verfahren nach einem der Ansprüche 2 bis 8 auszuführen.

## Revendications

1. Système de ventilation, le système de ventilation comprenant :
un ensemble (11, 11') de ventilateurs configurés pour aspirer de l'air à partir d'un espace fermé (10) en parallèle les uns par rapport aux autres, l'ensemble (11, 11') de ventilateurs comprenant un ensemble de ventilateurs à vitesse variable (12), et
une unité de commande (16) programmée pour actionner l'ensemble (11, 11') de ventilateurs selon une pluralité de niveaux de ventilation LV, une valeur respective de débit total TFRLV de l'air s'écoulant dans l'espace fermé (10) étant associée à chaque niveau de ventilation LV de ladite pluralité de niveaux de ventilation, chaque niveau de ventilation LV étant distingué par un nombre respectif NVFon de ventilateurs enclenchés de l'ensemble de ventilateurs à vitesse variable (12) et par une vitesse de rotation respective RS des ventilateurs à vitesse variable (12),
dans lequel l'unité de commande (16) est en outre configurée pour déterminer une valeur réelle de pression statique associée à l'ensemble (11, 11') de ventilateurs, calculer, sur la base de courbes de rendement statique associées aux ventilateurs à vitesse variable (12), une valeur provisoire RSₚ de la vitesse de rotation des ventilateurs à vitesse variable (12) qui maximise le rendement statique des ventilateurs à vitesse variable (12) à la valeur réelle de pression statique, et pour chaque niveau de ventilation LV, calculer et stocker dans une mémoire (18) la vitesse de rotation RS des ventilateurs à vitesse variable (12) associée au niveau de ventilation LV et le nombre NVFₒₙ de ventilateurs enclenchés de l'ensemble de ventilateurs à vitesse variable (12) associé au niveau de ventilation LV, sur la base de ladite valeur provisoire RSₚ de la vitesse de rotation.

2. Procédé de commande d'un système de ventilation selon la revendication 1, dans lequel le procédé comprend les étapes suivantes exécutées par l'unité de commande (16) :
a) déterminer une valeur réelle de pression statique associée à l'ensemble (11, 11') de ventilateurs,
b) calculer, sur la base de courbes de rendement statique associées aux ventilateurs à vitesse variable (12), une valeur provisoire RSₚ de la vitesse de rotation des ventilateurs à vitesse variable (12) qui maximise le rendement statique des ventilateurs à vitesse variable (12) à la valeur réelle de pression statique,
c) pour chaque niveau de ventilation LV, calculer et stocker dans une mémoire (18) la vitesse de rotation RS des ventilateurs à vitesse variable (12) associée au niveau de ventilation LV et le nombre NVFₒₙ de ventilateurs enclenchés de l'ensemble de ventilateurs à vitesse variable (12) associé au niveau de ventilation LV, sur la base de la valeur provisoire RSₚ de la vitesse de rotation, et
d) actionner l'ensemble (11, 11') de ventilateurs selon la pluralité de niveaux de ventilation LV.

3. Procédé selon la revendication 2, dans lequel l'étape c) comprend, pour chaque niveau de ventilation LV :
c.1) calculer une valeur de débit d'air produite par l'ensemble (11, 11') de ventilateurs et comparer la valeur calculée du débit d'air avec la valeur de débit total TFR_{LV} associée au niveau de ventilation LV,
c.1.1) si la valeur calculée du débit d'air est supérieure à la valeur de débit total TFR_{LV} associée au niveau de ventilation LV, réduire ladite valeur provisoire RSₚ afin d'égaliser la valeur calculée du débit d'air à la valeur de débit total TFR_{LV} associée au niveau de ventilation LV,
c.1.2) si la valeur calculée du débit d'air est inférieure à la valeur de débit total TFR_{LV} associée au niveau de ventilation LV, augmenter d'une unité un nombre provisoire NVFₚ de ventilateurs enclenchés de l'ensemble de ventilateurs à vitesse variable (12), ci-après nombre provisoire de ventilateurs à vitesse variable,
répéter les étapes de c.1) jusqu'à ce que la valeur calculée du débit d'air devienne égale à la valeur de débit total TFR_{LV} associée au niveau de ventilation LV,
c.3) stocker dans la mémoire (18) ladite valeur provisoire RSₚ comme vitesse de rotation RS des ventilateurs à vitesse variable (12) associée au niveau de ventilation LV, et ledit nombre provisoire de ventilateurs à vitesse variable NVFₚ comme nombre NVFₒₙ de ventilateurs enclenchés de l'ensemble de ventilateurs à vitesse variable (12) associé au niveau de ventilation LV.

4. Procédé selon la revendication 2 ou 3, dans lequel l'ensemble (11, 11') de ventilateurs comprend en outre un ensemble de ventilateurs à vitesse fixe (14), dans lequel chaque niveau de ventilation LV est en outre distingué par un nombre respectif NFFₒₙ de ventilateurs enclenchés de l'ensemble de ventilateurs à vitesse fixe (14), et dans lequel l'étape c) comprend en outre, pour chaque niveau de ventilation LV, le calcul et le stockage dans la mémoire (18) du nombre NFFₒₙ de ventilateurs enclenchés de l'ensemble de ventilateurs à vitesse fixe (14) associé au niveau de ventilation LV.

5. Procédé selon les revendications 3 et 4, dans lequel l'étape c.1.2) comprend en outre :
si la valeur calculée du débit d'air est inférieure à la valeur de débit total TFR_{LV} associée au niveau de ventilation LV, calculer le rendement statique ERP des ventilateurs à vitesse variable (12), et comparer le rendement statique calculé ERP avec un rendement statique des ventilateurs à vitesse fixe (14),
c.1.2.1) si le rendement statique calculé ERP des ventilateurs à vitesse variable (12) est inférieur au rendement statique des ventilateurs à vitesse fixe (14), augmenter d'une unité un nombre provisoire NFFₚ de ventilateurs enclenchés de l'ensemble de ventilateurs à vitesse fixe (14), ci-après nombre provisoire de ventilateurs à vitesse fixe, et, si la valeur calculée du débit d'air est supérieure à la valeur de débit total TFR_{LV} associée au niveau de ventilation LV, réduire ladite valeur provisoire RSₚ afin d'égaliser la valeur calculée du débit d'air à la valeur de débit total TFR_{LV} associée au niveau de ventilation LV,
c.1.2.2) si le rendement statique calculé ERP des ventilateurs à vitesse variable (12) est supérieur au rendement statique des ventilateurs à vitesse fixe (14), augmenter d'une unité le nombre provisoire de ventilateurs à vitesse variable NVFₚ,
dans lequel l'étape c.3) comprend en outre le stockage dans la mémoire (18) dudit nombre provisoire de ventilateurs à vitesse fixe NFFₚ comme nombre NFFₒₙ de ventilateurs enclenchés de l'ensemble de ventilateurs à vitesse fixe (14) associé au niveau de ventilation (LV).

6. Procédé selon l'une quelconque des revendications 2 à 5, dans lequel l'étape a) comprend la mesure de la valeur réelle de pression statique au moyen d'au moins un capteur de pression (19, 19') disposé immédiatement en amont de l'ensemble (11, 11') de ventilateurs.

7. Procédé selon l'une quelconque des revendications 2 à 5, dans lequel l'étape a) comprend l'estimation de la valeur réelle de pression statique sur la base d'une puissance absorbée mesurée et d'une vitesse de rotation mesurée d'un ventilateur de l'ensemble de ventilateurs à vitesse variable (12).

8. Procédé selon l'une quelconque des revendications 2 à 7, dans lequel l'étape a) comprend :
déterminer temporellement des valeurs réelles successives de pression statique associées à l'ensemble (11, 11') de ventilateurs, et comparer une valeur réelle de pression statique déterminée à un instant donné avec une valeur réelle de pression statique déterminée à un instant précédent,
et
dans lequel le procédé comprend en outre :
si la valeur réelle de pression statique déterminée à l'instant donné est supérieure ou inférieure à la valeur réelle de pression statique déterminée à l'instant précédent d'une quantité de seuil prédéterminée, déclencher les étapes b) et c).

9. Unité de commande (16) d'un système de ventilation, comprenant :
un processeur ; et
une mémoire (18) couplée au processeur pour stocker des instructions qui, lorsqu'elles sont exécutées par le processeur, amènent le processeur à exécuter le procédé selon l'une quelconque des revendications 2 à 8.
